Europäisches Patentamt

European Patent Office

Office européen des brevets

(19)

(11) Publication number: **0 153 504**

**A1**

(12) # EUROPEAN PATENT APPLICATION

(21) Application number: **84200273.5**

(22) Date of filing: **28.02.84**

(51) Int. Cl.⁴: **G 01 S 15/89**
**G 01 N 29/04**

(43) Date of publication of application:
**04.09.85  Bulletin 85/36**

(84) Designated Contracting States:
**AT BE CH DE FR GB IT LI LU NL SE**

(71) Applicant: **Innovi N.V.**
**Residentie Eliaerts Wilrykstraat 37-45 Bus 3**
**B-2200 Borgerhout(BE)**

(72) Inventor: **Leroy, Oswald Jozef Corneel**
**No. 453, Meensesteenweg**
**B-8620 Kortrijk-Bissegem(BE)**

(74) Representative: **Schumann, Bernard Herman**
**Johan et al,**
**OCTROOIBUREAU ARNOLD & SIEDSMA Sweelinckplein**
**1**
**NL-2517 GK The Hague(NL)**

(54) **A method and an apparatus for assessing local physical properties, e.g. eventual inhomogeneities in an object.**

(57) The invention relates to a method for determining local physical properties of an object (8), said properties causing transitions in the phase velocity in said object and in connection therewith the local acoustical impedance of said object, e.g. the contours and the type of eventual inhomogeneities, surface roughnesses, or layer thicknesses in a multi-layered object, and also relates to an apparatus for assessing such properties, said apparatus comprising a support (3) for said object, a signal generator (6), and an electro-acoustical transducer (5) for transforming the output signal of said signal generator into sound, said transducer being adapted to transmit sound waves towards the object to be tested through a medium (2).

Generally the invention has as its purpose to increase the resolution of the assessing method and in view thereof proposes to carry out the mentioned method in such a way that use is made of stationary sound waves, in such a way that an interference pattern (13) of densifications and rarefications representative of the physical properties involved can be formed in a medium by cooperation between the incident and the reflected sound waves, that on said interference pattern electromagnetic waves are directed and the deflection pattern of the electromagnetic waves deflected by said interference pattern is assessed. In view thereof an apparatus comprises a source (10) of electromagnetic waves, a transducer (14) for transforming said electromagnetic waves in a signal representative of the intensity of said waves and display means (15) for displaying on basis of said signal the intensity of the received electromagnetic waves, said source transmitting electromagnetic waves towards the transducer through the sound waves transmitted towards the object to be tested and eventually reflected by said object.

./...

5  45  46  50  53  54  52  51  48  47  49  55  56  57

FIG.5

-1-

Short title: A method and an apparatus for assessing local
physical properties, e.g. eventual
inhomogeneities in an object.
------------------------------------------------------------

The invention relates to a method for determining
local physical properties of an object, said properties
causing transitions in the phase velocity in said object
and in connection therewith the local acoustical impedance
of said object, e.g. the contours and the type of eventual
inhomogeneities, surface roughnesses, or layer thicknesses
in a multi-layered object, and also relates to an apparatus
for assessing local physical properties of an object, said
properties causing transitions in the phase velocity in
said object and in connection therewith the local acoustical
impedance of said object, e.g. the contours and the type of
eventual inhomogeneities, surface roughnesses, or layer
thicknesses in a multi-layered object, said apparatus
comprising a support for said object, a signal generator,
and an electro-acoustical transducer for transforming the
output signal of said signal generator into sound, said
transducer being adapted to transmit sound waves towards the
object to be tested through a medium.

-2-

**0153504**

Such a method and such an apparatus are known. According to the prior art method use is made of a source of sound waves intermittently transmitting sound waves towards the object, a microphone serving for receiving of the reflected sound waves. A signal processing unit is coupled with the microphone for interpreting the pattern of the waves reflected by the object. Such a technique is strongly similar to seismic techniques for the exploration of e.g. natural gas reservoirs or oil sources.

Particularly applications of the prior art method on relatively small scale, such as medical-diagnostical applications, are often prohibited by the very low resolution. In practice it is, namely, not very well possible to realize a narrow, relatively sharply bounded bundle, which is necessary for detecting inhomogeneities which are relatively small relative to the wave length of the sound waves.

Generally the invention has as its purpose to increase the resolution of the assessing method and in view thereof proposes to carry out the mentioned method in such a way that use is made of stationary sound waves, in such a way that an interference pattern of densifications and rarefications representative of the physical properties involved can be formed in a medium by cooperation between the incident and the reflected sound waves, that on said interference pattern electromagnetic waves are directed and the deflection pattern of the electromagnetic waves deflected by said interference pattern is assessed. In view thereof an apparatus of the present type is characterized by a source of electromagnetic waves, a transducer for transforming said electromagnetic waves in a signal representative of the intensity of said waves and display means for displaying on basis of said signal the intensity of the received electromagnetic waves, said source transmitting electromagnetic waves towards the transducer through the sound waves transmitted towards the object to be tested and eventually reflected by said object.

In order to obtain a spaciously sharply bounded deflection pattern having large contrasts preferably the electromagnetic waves are monochromatical. Further they can advantageously be coherent. In connection herewith the source can advantageously be a laser.

Further, in order to obtain a deflection pattern well suited for calculation and interpretation, preferably use is made of electromagnetic waves of the flat type.

The deflection pattern may be assessed by measuring the intensity of the deflected electromagnetic waves in dependence of the direction in which they leave the interference pattern. An apparatus for carrying out such a method has the special feature that the position of the or each transducer is adjustable in a direction corresponding with the direction of the incident sound waves.

Also the deflection pattern may be assessed by varying the frequency-content of the sound waves and measuring the intensity of the deflected electromagnetic waves leaving the interference pattern in a previously chosen direction, in dependence of said frequency-content. In this case the frequency-content of the signal supplied by the signal generator may be adjustable.

Also the frequency-content of the electromagnetic waves emitted by the source may be adjustable.

In order to avoid that with a relatively thin object the lower surface reflects (too strongly), which might give raise to interpretation errors, preferably the frequency-content of the sound waves emitted by the electro-acoustical transducer is chosen such as to obtain a previously chosen penetrating depth in the object to be tested.

On the other hand also the frequency-content of the sound waves emitted by said electro-acoustical transducer is chosen such as to obtain a substantial difference in the sound speed in the homogeneous part of the object to be tested and in inhomogeneities, if any, respectively.

For some determinations it may be necessary to make the intensity of the sound waves emitted by the transducer relatively high. In that case there is a risk that the sound waves reflected by the object reach the transducer with such a strength, that they affect the operation of said transducer. In order to avoid said risk use may be made of an apparatus exhibiting the special feature that the transducer is positioned in such a way that it transmits the sound waves towards said object in such a direction, that sound waves reflected by said objects are not or to a neglectable degree able to affect the transducer.

The invention will now be explained with reference to a number of arbitrary embodiments. In the drawing:

Fig. 1 shows a schematic view of a first embodiment of an apparatus according to the invention;

Fig. 2 a schematic view corresponding to fig. 1 of a second embodiment of the invention;

Fig. 3 shows a schematic perspective view of a third embodiment;

Fig. 4 shows a schematic perspective view of a fourth embodiment;

Fig. 5 shows a schematic perspective view, partially broken away, of a fifth embodiment;

Fig. 6 shows a schematic perspective view, partially broken away, of a sixth embodiment;

Fig. 7 the ratio $I_0/I_1$ for a layered structure of plexiglass/aluminum;

Fig. 8 shows the ratio $I_0/I_1$ as a function of the thickness of the plexiglass-layer according to fig. 7 for two different frequencies, using immersion in water; and

Fig. 9 shows the ratio $I_0/I_1$ for an ultrasonic wave incident through a fluid on a rust proof layer, which is coupled with an aluminum half-space, for water and glycerine, respectively, as a function of $_{32}v_3$.

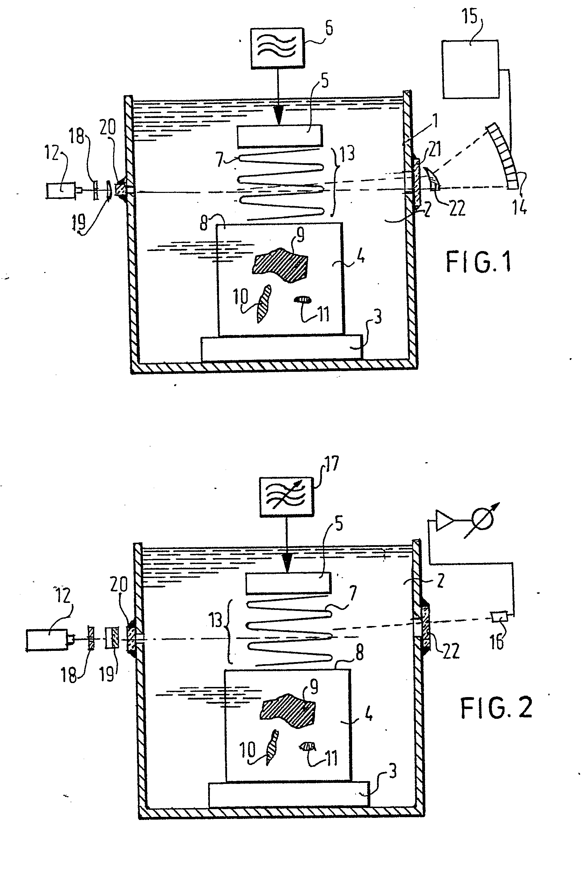

Fig. 1 shows a container 1 containing fluid 2. In this fluid there is an object 4 carried by a support 3. This object is irradiated with sound waves from above by an electro-acoustical transducer 5, which is connected with the output of a signal generator 6. Said signal generator 6 supplies an output signal having a previously chosen frequency-content to the transducer 5. A waved line 7 shows symbolically the sound waves emitted by the transducer 5. These sound waves are of the flat type and are directed towards the object 4. The flat upper surface 8 of this object 4 to be tested will reflect a part of the sound waves, whilst another part is transmitted in the direction of inhomogeneities 9, 10, 11. These can e.g. be alien objects enclosed by the object or air-bubbles. The basis of the present measuring method is that the sound speed of the inhomogeneities is different from that in the homogeneous part of the object 4. As a result of such a difference in sound speed reflection takes place at the transition surfaces, due to which a part of the locally arriving sound waves is reflected which ultimately will be recognizable in an interference pattern of densifications and rarefications appearing between the electro-acoustic transducer 5 and the flat upper surface 8 of the object 4.

A laser 12 supplying coherent monochromatical electromagnetic radiation is through a diaphragm 18, a lens 19 and a window 20 directed to the mentioned interference pattern which in fig. 1 is generally indicated with the reference number 13. This interference pattern 13 operates in such a way that in dependence of the properties of the pattern 13 and the wave-length of the incident laser light a deflection pattern appears. This deflection pattern, in this case the first-order deflection pattern, is assessed by means of a row of photo-sensors 14, coupled with a signal processing and display-unit 15, said photo-sensors 14 receiving electromagnetic radiation through a larger second window 21 and a lens 22.

Fig. 2 shows an embodiment, in which no use is made of a row of photo-sensors 14, but in place thereof only one photo-sensor 16. In order to be able to assess the full deflection pattern of the first-order by means of such a configuration, in this case use is made of a signal generator 17, the output frequency of which is adjustable. As a result of this adjustability the wave-length of the sound waves supplied by the electro-acoustical transducer 5 in the fluid can vary. In dependence on this wave-length also the distance between densifications and rarefications in the interference pattern 13 varies.

It will be clear that in principle the methods according to figures 1 and 2 may yield the same result. The advantage of the apparatus according to fig. 2 is that by means of only one stationary measurement by use of the signal processing and display-unit 15 the results are available in a short time, whilst in the alternative embodiment according to fig. 2 some time is needed to perform the frequency variation of the signal generator 17 over a previously chosen frequency-band.

It should be noted that also a combination of both embodiments is possible, i.e. in the embodiment according to fig. 1 use might be made of the variable signal generator 17 instead of the fixed signal generator 6.

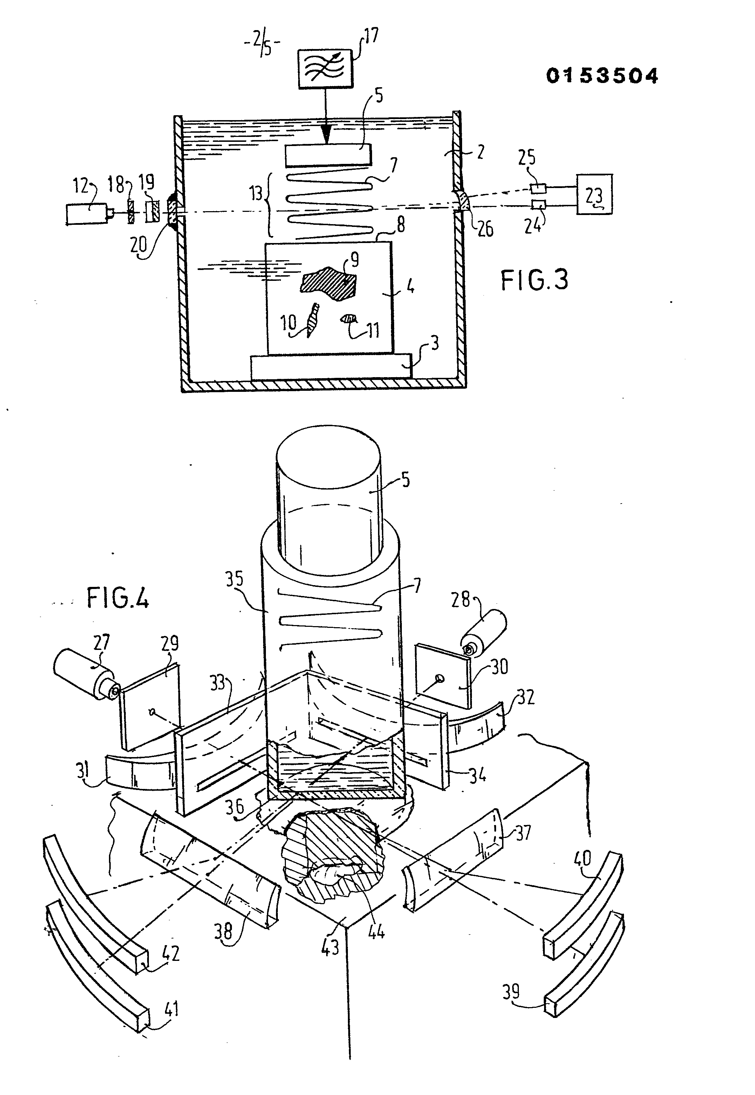

Fig. 3 shows a third embodiment, in which a signal processing and display-unit 23 is adapted for assessing the ratio of the intensities of the deflection patterns of the zero and the first-orders $I_0/I_1$. Thereto use is made of two photo-sensors 24, 25, for the zero and first-orders, respectively, said photo-sensors receiving electromagnetic radiation through a window 26 in the form of a lens. Similar to the embodiment according to fig. 1 the use of a lens has the advantage that the angular distance of successive orders is increased, so that the photo-sensors 24, 25 can be positioned in technically realizable relative positions.

The embodiment according to fig. 3 has the advantage that the determination of $I_0/I_1$ can be made with a higher sensitivity than only $I_1$ or $I_0$. This aspect will discussed later.

Fig. 4 shows a fourth embodiment being a further elaboration of the principle according to fig. 3. Two lasers 27, 28 emit radiation through a diaphragm 29, 30, which radiation is supplied to lenses 31, 32, from which the radiation in the form of a brought bundle is supplied to slid diaphragms 33, 34, from which the transmitted radiation is, through a container 35, close to the bottom 36 thereof, is supplied to cylindrical lenses 37, 38, behind which photo-sensors, 39, 40 and 41, 42, respectively, are positioned. Sensors 39, 41 serve for receiving radiation of the zero order, whilst sensors 40, 42 serve for receiving radiation of the first-order.                              **0153504**

At the upper side of the container 35 an acoustical transducer 5 is positioned for supplying ultrasonic sound waves 7 to the fluid present in the container 35.

The bottom 36 is supported by an object 43, comprising an alien object 44 to be tested.

Fully similarly to the configuration according to fig. 3 the photo-sensors 39, 42 are connected with signal processing means, by which a spacial picture of the alien body 44 can be obtained.

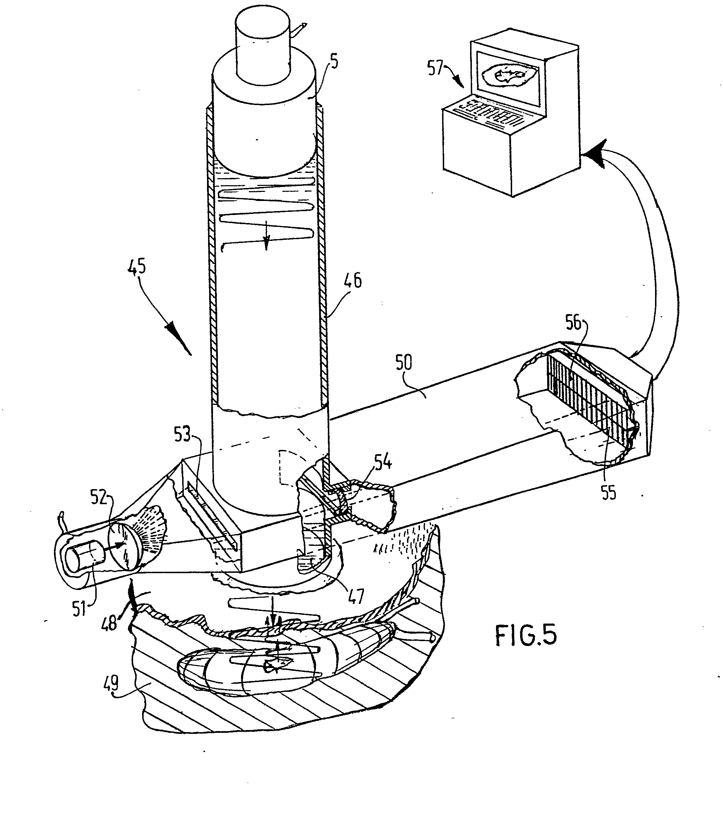

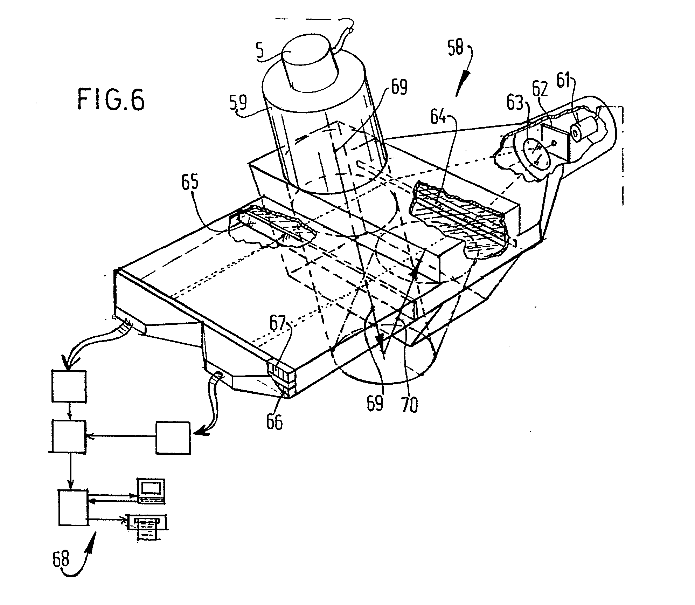

It should be noted that the path of the electromagnetic radiation emitted by the lasers 27, 28 extends on only a small distance abomen the upper surface of the object 43. Despite the fact that in principle the same information is also present on a larger distance of the object, a determination on the described smaller distance is advantageous, e.g. because the incident sound wave may be of lower intensity, and nevertheless the reflected sound wave does not interfere with the operation of the transducer 5. This aspect will be discussed in more detail with reference to fig. 6. Fig. 5 shows an apparatus 45, which is based on the principle shown in figures 3 and 4, and specially adapted for medical, diagnostical investigations.

The apparatus 45 comprises a container at the upper end of which an electro-acoustical transducer 5 is positioned, the bottom 47 of said container being adapted to be placed on the skin 48 of a patient 49. The container 46 is coupled with a light-tight house 50, i.e. a house inpenetrable for radiation having the same wave-length as the electromagnetic radiation emitted by laser 51. The laser 51 supplies its radiation through a lense 52 towards a slid diaphragm 53, by which on a relatively small distance from the bottom 47 a horizontally broad but vertical thin bundle of electromagnetic radiation is transmitted through the fluid in the container 46 in the direction of a lense 54 also serving as a window, behind which similarly to fig. 3 two rows of sensors 55, 56 are positioned for the zero and the first-orders, respectively. The output signals thereof are supplied to a signal processing and display-unit 57.

Fig. 6 shows an apparatus 58, the construction of which is for an important part corresponding to the construction according to fig. 5, but deviating essentially therefrom in that a container 59 for fluid has an inclined position relatively to a light-tight house 60. This should be understood as follows. A laser 61 supplies through a diaphragm 62, a lens 63 and a slid diaphragm 64 a horizontally broad but vertically thin bundle of electromagnetic radiation in the direction of a cylindrical lens 65, behind which two rows of photo-sensors 66, 67 are placed, which are coupled with a signal processing and display-unit 68. The container 59 has an axis 69 forming an angle with the plane of the thin bundle of electromagnetic radiation transmitted by the slid diaphragm 64. As a result of the mentioned inclined position the reflected bundle of electromagnetic radiation, the axis of which is for the sake of clarity schematically indicated with an arrow 70, also forms an angle with the mentioned plane, in such a way that in the region of the broad radiation bundle a zone of cooperation or interference exists between the incident and a reflected bundle, if any, due to which a pattern of densifications and rarefications is generated, which can be assessed in the way described before. By the inclined position described and drawn in fig. 6 the reflected bundle does not reach the transducer 5 and therefore can not affect its operation. By using this configuration therefore the amount of acoustical energy supplied per unit time by the transducer 5 does not need to be limited in view of the necessity, not to have the transducer influenced by the reflected sound waves, in such a way that higher powers may be used, which influences the signal/noise ratio in a favourable way.

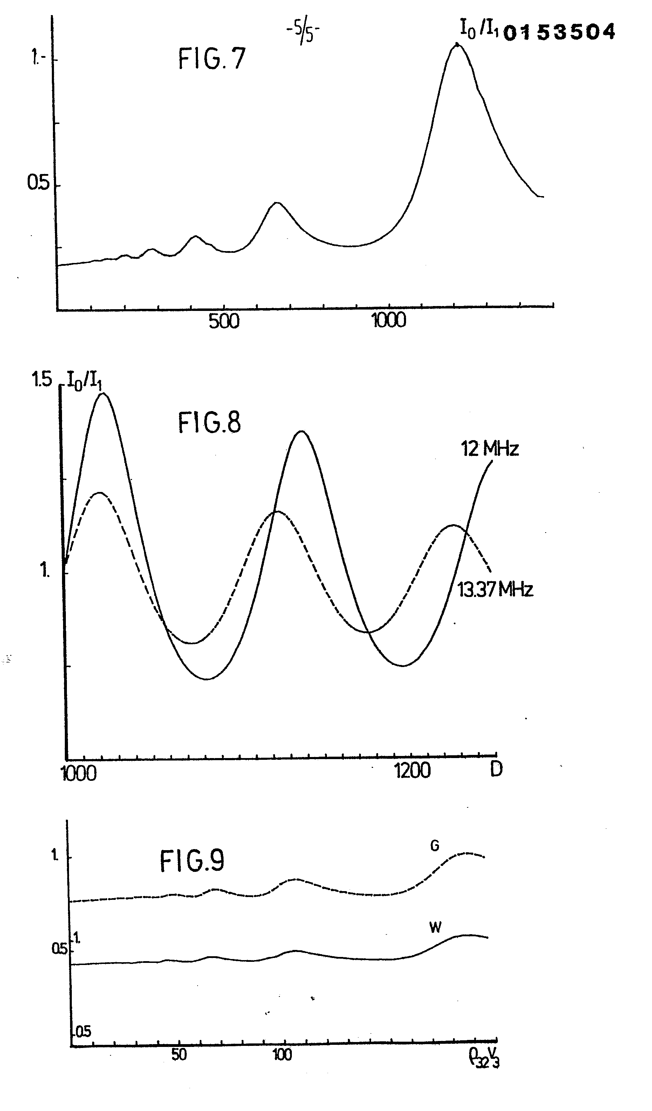

Fig. 7 shows that the ratio $I_0/I_1$ varies in an extraordinarily high degree, within a certain range, with only small variations of the acoustical impedance. The frequency used in this case amounts to 5 MHz.

Fig. 8 shows the ratio $I_0/I_1$ as a function of the thickness of a plexiglass-layer on an aluminum carrier. The horizontal axis corresponds to the thickness in micrometer.

-9-    0153504

The drawn line corresponds with an acoustical frequency of 12 MHz, whilst the interrupted line corresponds to 13,37 MHz. By a well-considered choice of the frequency the penetration depth and in connection therewith, as it were, the focussing of the system can be influenced.

Fig. 7 shows the normalized value of $I_0/I_1$ as a function of the acoustical impedance $_{32}v_3$, for a rust-proof layer of 1 mm thickness, supported by an aluminum carrier. The acoustical frequency amounts to 5 MHz. The drawn curve is valid for water als transmitting medium and the interrupted curve is valid for glycerine. It is clear that for water changes of $I_0/I_1$ are very small and most often hardly or not detectable. For glycerine the changes are stronger for higher values of $_{32}v_3$. From this fact it appears that the choice of the fluid should be previously considered well.

-1-

CLAIMS
------

1. A method for determining local physical properties of an object, said properties causing transitions in the phase velocity in said object and in connection therewith the local acoustical impedance of said object, e.g. the contours and the type of eventual inhomogeneities, surface roughnesses, or layer thicknesses in a multi-layered object, characterized in that use is made of stationary sound waves, in such a way that an interference pattern of densifications and rarefications representative of the physical properties involved can be formed in a medium by cooperation between the incident and the reflected sound waves, that on said interference pattern electromagnetic waves are directed and the deflection pattern of the electromagnetic waves deflected by said interference pattern is assessed.

2. The method according to claim 1 characterized in that the ratio of the intensities of two deflection orders is assessed.

3. The method according to claim 2 characterized in that the ratio of the intensities of the zero and the first deflection order is assessed.

-2-

0153504

4. The method according to anyone of the
preceding claims characterized in that the electromagnetic
waves are monochromatical.

5. The method according to anyone of the preceding
claims characterized in that the electromagnetic waves are
coherent.

6. The method according to anyone of the preceding
claims characterized in that the electromagnetic waves are
of the flat type.

7. The method according to anyone of the preceding
claims characterized in that the deflection pattern is
assessed by measuring the intensity of the deflected electromagnetic waves in dependence of the direction in which they
leave the interference pattern.

8. The method according to anyone of the preceding
claims characterized in that the deflection pattern is assessed
by varying the frequency-content of the sound waves and
measuring the intensity of the deflected electromagnetic waves
leaving the interference pattern in a previously chosen
direction, in dependence of said frequency-content.

9. The method according to anyone of the preceding
claims characterized in that the electromagnetic waves are
directed towards the interference pattern as close as
possible to the related surface.

10. An apparatus for assessing local physical
properties of an object, said properties causing transitions
in the phase velocity in said object and in connection therewith the local acoustical impedance of said object, e.g.
the contours and the type of eventual inhomogeneities,
surface roughnesses, or layer thicknesses in a multi-layered
object, said apparatus comprising a support for said object,
a signal generator, and an electro-acoustical transducer
for transforming the output signal of said signal generator
into sound, said transducer being adapted to transmit sound
waves towards the object to be tested through a medium
characterized by a source of electromagnetic waves, a
transducer for transforming said electromagnetic waves in
a signal representative of the intensity of said waves and

0153504

display means for displaying on basis of said signal the intensity of the received electromagnetic waves, said source transmitting electromagnetic waves towards the transducer through the sound waves transmitted towards the object to be tested and eventually reflected by said object.

11. The apparatus according to claim 10, characterized in that the source of electromagnetic waves is a laser.

12. The apparatus according to claims 10 and 11, characterized in that the position of the or each transducer is adjustable in a direction corresponding with the direction of the incident sound waves.

13. The apparatus according to anyone of claims 10 - 12, characterized in that the frequency-content of the signal supplied by the signal generator is adjustable.

14. The apparatus according to anyone of claims 10 - 12, characterized in that the frequency-content of the electromagnetic waves emitted by the source is adjustable.

15. The apparatus according to anyone of claims 10 - 14, characterized in that the frequency-content of the sound waves emitted by the electro-acoustical transducer is chosen such as to obtain a previously chosen penetrating depth in the object to be tested.

16. The apparatus according to anyone of claims 10 - 15, characterized in that the frequency-content of the sound waves emitted by said electro-acoustical transducer is chosen such as to obtain a substantial difference in the sound speed in the homogeneous part of the object to be tested and in inhomogeneities, if any, respectively.

17. The apparatus according to anyone of claims 10 - 16, characterized in that the transducer is positioned in such a way that it transmits the sound waves towards said object in such a direction, that sound waves reflected by said objects are not or to a neglectable degree able to affect the transducer.

18. The apparatus according to anyone of claims 10 - 17, characterized by means for positioning the object in such a way relative to the path of the electromagnetic waves, that the electromagnetic waves are directed towards the interference pattern as close as possible to the related surface of the object.

0153504

FIG.1

FIG.2

12150

FIG.3

FIG.4

0153504

FIG.5

FIG.6

-4/5-

0153504

FIG.7

FIG.8

12 MHz

13.37 MHz

FIG.9

G

W

European Patent
Office
EUROPEAN SEARCH REPORT

0153504

EP 84 20 0273

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | JOURNAL OF APPLIED PHYSICS, vol. 46, no. 8, August 1975, pages 3690-3692, American Institute of Physics, New York, US E. BRIDOUX et al.: "Real-time visualization of standing acoustic waves" * Page 3690, paragraphs 1-6 * | 1,7,10 | G 01 S 15/89 G 01 N 29/04 |
| A | US-A-3 636 248 (KORPEL) * Abstract; column 1, lines 6-51; column 1, line 62 - column 2, line 30; column 2, line 63 - column 3, line 39 * | 1,4,5, 10 | |
| A | US-A-3 831 135 (SMITH) * Abstract; figures 4,5; column 4, line 56 - column 5, line 58; column 6, line 47 - column 7, line 30 * | 1,4,5 10,11 | TECHNICAL FIELDS SEARCHED (Int. Cl. 3) |
| A | US-A-3 763 693 (BHUTA et al.) * Abstract; column 2, line 52 - column 5, line 31 * | 1,5,10 ,11 | G 01 S G 01 N G 01 H G 02 F |
| A | US-A-3 397 936 (FRAYNE et al.) * Whole document * | 1,10 | |
| | ---     -/- | | |

The present search report has been drawn up for all claims

| Place of search THE HAGUE | Date of completion of the search 29-05-1984 | Examiner OLDROYD D.L. |
|---|---|---|

European Patent
Office

**EUROPEAN SEARCH REPORT**

| | **DOCUMENTS CONSIDERED TO BE RELEVANT** | | Page 2 | |
|---|---|---|---|---|
| Category | Citation of document with indication, where appropriate, of relevant passages | Relevant to claim | CLASSIFICATION OF THE APPLICATION (Int. Cl. ³) | |
| A | GB-A-2 027 887  (SECRETARY OF STATE FOR DEFENCE) * Whole document * | 1,10 | | |
| | ----- | | | |
| | | | TECHNICAL FIELDS SEARCHED (Int. Cl. ³) | |
| | The present search report has been drawn up for all claims | | | |

| Place of search THE HAGUE | Date of completion of the search 29-05-1984 | Examiner OLDROYD D.L. |
|---|---|---|